# EUROPEAN PATENT APPLICATION

(11) **EP 4 708 783 A1**
(43) Date of publication of application: **11.03.2026**
(21) Application number: 24198528.2
(22) Date of filing: 04.09.2024
(51) Int. Cl.: H04L 12/403, H04L 61/5038, H04L 12/40

(54) **CONFIGURATION OF A NEW SLAVE DEVICE IN A NETWORK**

(71) Applicant: Valeo Systèmes d'Essuyage, 78322 Le Mesnil Saint Denis (FR)
(72) Inventor: BENKIRANE, Amine, ISSOIRE (FR); GHALY, David, CAIRO (EG); ELRAYES, Mohamed, CAIRO (EG)
(74) Representative: Valeo Visibility

(57) **Abstract**

The invention provides a method for configuring a new slave device in a network comprising a master device and a plurality of slave devices of a same type, the master device storing a default identifier and respective attributed identifiers for the slave devices, the method comprising, for each stored attributed identifier, sending (302) a status request indicating the attributed identifier as receiver, and in case of an absence of response, associating (305) a status "missing" with the attributed identifier, ending (306) A request indicating the default identifier as receiver is also sent (306), and, upon reception (307) of a response to the request, a new slave device is detected. If so and if there is one and only one missing slave device, a configuration request indicating the default identifier as receiver is sent (309), for configuring the new slave device by replacing the default identifier with an attributed identifier.

## Description

The present invention concerns configuration of a new slave device in a network comprising a master device and a plurality of slave devices. The invention applies in particular, while not exclusively, to networks implemented in a vehicle, for example to Local Interconnect Networks, LIN.

In a wired network comprising a Master-Slave architecture, the master device controls all communication between the slave devices and the master device. To do this, the slave devices need to be configured with individual identifiers.

For example, under the LIN protocol, the master device controls the communications in the network based on frame identifier values that are introduced in a frame header transmitted in the network. Each slave device can be a sender, a receiver, or have no such role, for a frame response to a given frame identifier value introduced in a frame header. However, this requires to configure the slave devices before they are communicating in the network so that they are able to determine whether they should act as sender or receiver upon reception of a frame header comprising a given frame identifier value. In addition, each slave device should be uniquely identified in the network.

The frame identifier values for a given slave device can be predetermined and stored in advance in the given slave device.

However, some networks comprise a plurality of slave devices of the same type, meaning that they have the same structure and the same function. This is the case in sensor cleaning system for example, comprising a plurality of cameras, a plurality of blowers and/or a plurality of wash pumps. Because slave devices of the same type are preferably produced in a series, it is not possible to know in advance in which position it will be mounted in the network, when there are several slave devices of the same type in the network, and it is therefore not possible to attribute an identifier in advance.

It therefore requires a manual configuration by an operator of the network, which is long and cumbersome for the operator, and which may lead to error in the configurations of the slave devices.

There is therefore a need to improve the configuration of slave devices in a network when the slave devices are of the same type, in particular, while not exclusively, in a LIN network, and upon introduction of a new slave device in the network, while other slave devices are already comprised in the network.

A first aspect of the invention concerns a method for configuring a new slave device in a network comprising a master device and a plurality of slave devices, the plurality comprising slave devices of a same type, the master device storing a default identifier and storing respective attributed identifiers associated with the slave devices of the plurality, the method being implemented by the master device and comprising the following steps, for each stored attributed identifier:
- sending a status request indicating the attributed identifier as receiver of the status request;
- in case of an absence of response to the status request, assigning a first status to the attributed identifier, the first status indicating that the slave device associated with the attributed identifier is a missing slave device.

The method further comprises:
- sending a request indicating the default identifier as receiver, and, in case of a reception of a response to the request, detecting a new slave device in the network,
- if the new slave device is detected and if there is one and only one missing slave device, sending a configuration request indicating the default identifier as receiver, for configuring the new slave device by replacing the default identifier with an attributed identifier.

By using a default identifier when introducing a new slave device in a network, the slave devices of the same type can be produced in series, without the need to attribute an attributed identifier in advance before adding the new slave device in the network.

According to some embodiments, the configuration request may be for configuring the new device by replacing the default identifier with the attributed identifier associated with the missing slave device.

This enables to replace a slave device with a new slave device of the same type, without the need to define a new attributed identifier each time a new slave device is added in the network.

According to some embodiments, the network may be a Local Interconnect Network, LIN, and the status requests, the request indicating the default identifier and configuration request may be conforming to the LIN protocol.

A LIN network is cheaper and easier to implement than a CAN network. In addition, it requires a wired communication link comprising a single cable.

According to some embodiments, the method further comprises, after sending the configuration request, named first configuration request, sending a second configuration request indicating, as receiver, the attributed identifier configured in the new slave device, the second configuration request defining one or several frame identifiers for which the new slave device is a receiver or a sender in subsequent communications.

Therefore, a complete configuration can be performed in an automated way according to the invention.

According to some embodiments, the method may further comprise, for each attributed identifier, after sending a status request indicating the attributed identifier as receiver, determining a status to be assigned to the attributed identifier, among a plurality of predefined statuses including the first status and at least one other status, the status being determined based on a received response to the status request or based on the absence of response to the status request.

This allows to maintain updated statuses for the plurality of slave devices. Such statuses may be used in the context of a diagnosis or for other purposes.

As a complement, the at least one other status may comprise a second status indicating that the slave device corresponding to the attributed identifier is operational, a third status indicating that the slave device associated with the attributed identifier is defective.

Therefore, this embodiment allows to perform configuration of a new slave device in the context of a diagnosis process of the slave devices of the network. This allows to maintain updated statuses of the slave devices and facilitates detection of errors or misconfigurations.

Alternatively or as a complement, if, after sending of a status request indicating a given attributed identifier as receiver, the master device receives a corrupted response, the master device may assign a redundant status to the attributed identifier.

This embodiment allows to detect misconfiguration of slave devices.

According to some embodiments, if no new slave device is detected, or if none of the slave devices is missing, or if strictly more than one of the slave devices is missing, then the master device may generate a message based on the statuses assigned to the attributed identifiers and based on whether a new slave device is detected or not.

This allows to generate a message depending on an identified situation. The message can be intended to an operator in charge of maintenance of the network, or to the user of the network, which enables to take an appropriate corrective action depending on the identified situation.

As a complement, if several new slave devices are detected, the master device may generate a message indicating that a manual configuration is required.

Therefore, this embodiment allows to perform an automated configuration of new slave devices, one by one. However, in case where several new slave devices are introduced in the network, a manual configuration can be used.

Alternatively or as a complement, if several attributed identifiers are assigned with the first status, the master device may generate a message indicating that a manual configuration is required.

This enables to avoid attributing an attributed identifier to a new device, when there is a doubt about the slave device being replaced, because there are several missing slave devices. A manual configuration is therefore advantageous to avoid misconfiguration.

A second aspect of the invention concerns a computer program comprising instructions arranged for implementing the method according to the first aspect of the invention, when said instructions are executed by a processor.

A third aspect of the invention concerns a master device for configuring a new slave device in a network comprising a plurality of slave devices, the plurality comprising slave devices of a same type, the master device comprising a memory storing a default identifier and storing respective attributed identifiers associated with the slave devices of the plurality, the master device comprising an interface for communicating with the slave devices in the network, and further comprising a processor configured for, for each stored attributed identifier:
- sending, via the interface, a status request indicating the attributed identifier as receiver of the status request;
- in case of an absence of response to the status request, assigning a first status to the attributed identifier, the first status indicating that the slave device associated with the attributed identifier is a missing slave device.

The processor is further configured for :
- sending, via the interface, a request indicating the default identifier as receiver, and, in case of a reception of a response to the request, detecting a new slave device in the network,
- if the new slave device is detected and if there is one and only one missing slave device, sending, via the interface, a configuration request indicating the default identifier as receiver, for configuring the new slave device by replacing the default identifier with an attributed identifier

A fourth aspect of the invention concerns network comprising a master device according to the third aspect of the invention, and a plurality of slave devices of a same type, the master device and the slave devices being arranged to communicate via a wired communication link.

According to some embodiments, the slave devices may be wash pumps.

A fifth aspect of the invention concerns a vehicle comprising the network according to the fourth aspect of the invention.

### Brief description of the drawings :

[fig 1] shows a network comprising a master device and a plurality of slave devices, according to some embodiments of the invention ;
[fig 2] shows a network integrated in a vehicle, according to some embodiments of the invention;
[fig 3] shows the steps of a method for configuring a new slave device in a network according to some embodiments of the invention;
[fig 4] shows a structure of a master device according to some embodiments of the invention.

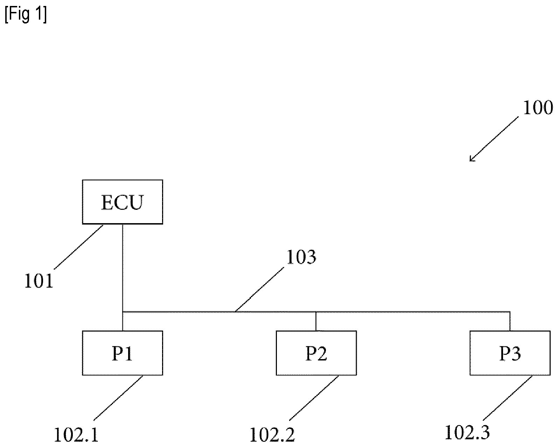

Figure 1 illustrates a network 100 comprising a master device 101 and a plurality of slave devices 102.1 to 102.3 according to some embodiments of the invention.

According to the invention, the plurality comprises a maximum number of slave devices and the network is designed for said maximum number of slave devices. No restriction is attached to the maximum number of slave devices of the plurality, nor to the number of slave devices of the same type. In what follows, for illustrative purposes, it is considered that the network 100 is configured to comprise three slave devices 102.1 to 102.3 of the same type. As previously explained, when one or several slave devices are missing, the network may comprise less than three slave devices, but it never comprises more than the maximum number of slave devices for which it is designed.

The master device 101 may be a control unit in charge of collecting data from the plurality of slave devices. To this end, the master device 101 and the slave devices 102.1 to 102.3 can communicate via a bus supported by a wired communication link 103.

No restriction is attached to the type of bus that is used to communicate in the network 100, which can be a LIN, for "Local Interconnect Network", or any other architecture based on a single master device and one or several slave devices. In what follows, it is considered, for illustrative purposes, that the network 100 is a LIN, and that the master device 101 and the slave devices 102.1 to 102.3 are configured to communicate via frames that are conforming to the LIN protocol.

According to the LIN protocol, the master device 101 initiates communications by transmitting a request, that is named "frame header", the request comprising a frame identifier field, or frame ID, indicating a frame ID value. Each of the slave devices 102.1-102.3, upon reception of the frame header, or request, can determine, based on the frame ID value, if the slave device is concerned by a frame response to the frame header, i.e. can determine if the slave device can send or receive the frame response corresponding to the frame header indicating the frame ID value.

More precisely, each slave device is configured to store one or several frame ID values, or range of at least one frame ID value, for which the slave device is a sender of the frame response or is a receiver of the frame response. For example, the first slave device 102.1 is configured to store a first range of frame ID values for which the first slave device 102.1 is sender of the frame response and a second range of frame ID values for which the first slave device 102.1 is receiver of the frame response.

For example, for a frame ID value of 0x10 comprised in a frame header transmitted in the network 100 by the master device 101, the first slave device 102.1 may be the sender of the frame response and the second slave device 102.2 can be the receiver of the frame response. For another frame ID value of Ox12 comprised in a frame header transmitted in the network 100 by the master device 101, the master device 101 can be the sender of the frame response and the third slave device 102.3 can be the receiver of the frame response.

The master device 101 stores a table comprising several frame ID values, each frame ID value being associated in the table:
- to a sender field indicating which of the slave devices 102.1-102.3 or the master device 101 is the sender of a frame response when the frame header indicates the frame ID value; and
- to a receiver field indicating which of the slave devices 102.1-102.3 or the master device 101 is the receiver of a frame response when the frame header indicates the frame ID value.

The master device 101 may further store service ID values corresponding to specific services. For example, according to the LIN protocol, the following four services correspond to the following frame ID values.

A first service ID value of 0xB0 corresponds to a service named "Assign NAD", used for attributing an identifier for diagnostic to a slave device, also named "attributed identifier", when no identifier for diagnostic has been previously attributed to the slave device. According to the invention, each time a new slave device is introduced in the network 100 in replacement of a previous slave device, the new slave device is initially configured with a default identifier for diagnostic, or default NAD. The frame comprising the first service ID value therefore indicates:
- the default NAD as recipient of the frame, and
- the attributed NAD that should be used to reconfigure the new slave device, in replacement of the default NAD.

The frame comprising the first service ID value can therefore be considered as a request for configuration, and, upon reception of the request for configuration, a new slave device initially configured with the default NAD, is configured by replacing the default NAD with the attributed NAD comprised in the frame having the first service ID value. In what follows, the identifier for diagnostic is called NAD, which stands for Node Address for Diagnostic according to the LIN protocol.

A second service ID value of OxB2 corresponds to a service named "Read by Identifier". A frame comprising the second service ID value further comprises an attributed identifier of a slave device, or attributed NAD, previously attributed using the 0xB0 service to the slave device, or the default NAD. The service "Read by Identifier" can be used to request predefined data from the slave device identified by the attributed NAD, or from a new slave device using the default NAD. Upon reception of a frame comprising the second service ID value, each slave device checks the attributed NAD or default NAD, and sends a frame response to the frame only if the slave device is currently configured with the attributed or default NAD indicated in the frame. According to the invention, frames comprising the second service ID value can be used as requests for diagnostic of the slave devices, as explained in what follows.

A third service ID value of OxB3 corresponds to a service named "Conditional Change NAD" used for attributing a new identifier for diagnostic, or new attributed NAD, to a slave device, when an attributed NAD has been previously attributed to the slave device. The frame comprising the third frame ID value therefore further indicates:
- the attributed NAD that has been previously attributed to a given slave device;
- the new attributed NAD, that should be used by the given slave device for reconfiguration, by replacing the attributed NAD with the new attributed NAD.

The frame comprising the third service ID value can therefore be considered as a request for reconfiguration, and, upon reception of the request for reconfiguration, a new slave device initially configured with the attributed NAD indicated in the frame, is reconfigured by replacing the attributed NAD with the new attributed NAD comprised in the frame having the third service ID value.

A fourth service ID value of OxB7 corresponds to a service named "Assign frame identifier range", which is used to assign at least one frame ID value to a given slave device, so that the given slave device is configured as receiver or sender for said at least one frame ID. The frame with the fourth service ID value can therefore comprise:
- an attributed NAD for identifying the slave device to which the at least one frame ID value is assigned;
- the at least one frame ID value, with a binary information indicating whether the slave device is configured as a receiver or a sender for said at least one frame ID value. In complement, the frame may comprise a first ID value range associated with a first binary information value, for defining frame ID values for which the slave device is a sender, and a second ID value range associated with a second binary information value, for defining frame ID values for which the slave device is a receiver.

Other services can be associated with other service ID values according to the LIN protocol.

According to the invention, the slave devices 102.1 to 102.3 are of the same type, which means that they have the same structure and the same function, but they are positioned to respective locations to perform the common function in a distributed way.

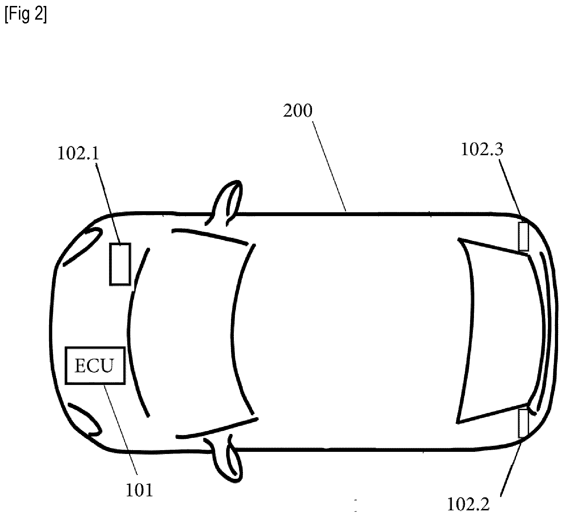

Referring to figure 2, the network 100 can be integrated in a vehicle 200. However, the network 100 according to the invention can be integrated in another device, such as a home appliance or an industrial automation system.

When integrated in a vehicle 200, the network 100 can be used to control:
- slave devices being wash pumps of a wiping system;
- slave devices being cameras positioned at different locations in the vehicle 100; or
- slave devices being blowers of an air conditioning system.

In what follows, the example of a network integrated in a vehicle 200 and of slave devices being pumps of a wiping system of the vehicle 200, is considered, for illustrative purposes only.

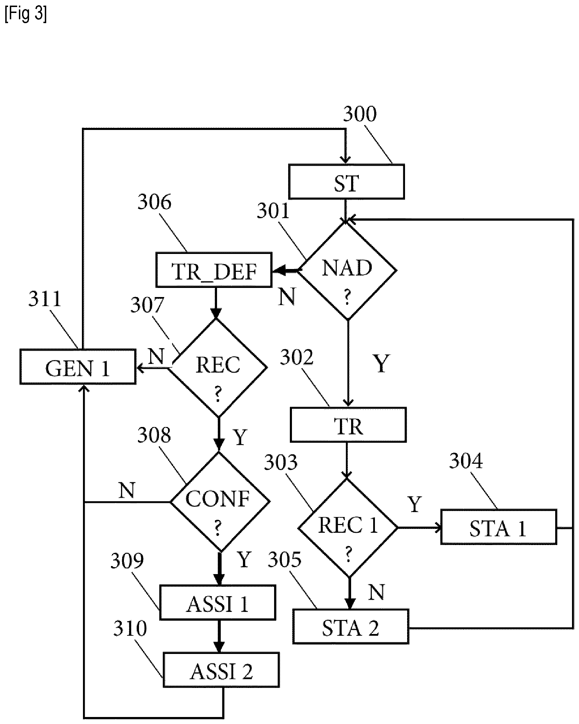

Figure 3 shows the steps of a method for configuring a new slave device according to some embodiments of the invention.

According to the invention, the method is implemented by a master device, such as the master device 101 previously described.

At a step 200, the method is initiated. No restriction is attached to the way the initiation of the method is triggered. For example, the method can be initiated at a given frequency, for example every day or every week. Alternatively, or in complement, the method can be initiated by an operator, using a starting signal transmitted to the master device 101. The operator may advantageously trigger the initiation of the method when replacing one of the pumps, for example because it is defective, by a new pump.

Before the method is initiated, the master device 101 stores, as previously described an attributed NAD for each of the slave devices in the network 100. In the example of figure 1, the master device 101 stores a first attributed NAD attributed to the first slave device 102.1, a second attributed NAD attributed to the second slave device 102.3 and a third attributed NAD attributed to the third slave device 102.3. Each attributed NAD enables to identify the location of the slave device, because all of the slave devices have the same structure and function. For example, as shown on figure 2, the first NAD is associated with the slave device 102.1 located at the front of the car, whereas the second NAD is associated with the slave device 102.2 located at the rear and on the left side of the vehicle 200, and the third NAD is associated with the slave device 102.3 located at the rear and on the right side of the vehicle 200.

The master device 101 further stores, as previously described, a table associating frame ID values with a receiver field and a sender field as previously described and/or service ID values associated with specific services, such as the four services described previously.

At step 301, the master device 301 checks whether a status has been assigned to each of the stored attributed NAD, at previous steps 304 or 305. At the first iteration of step 301, no status has been assigned, so that the first attributed NAD is selected and the method goes to step 302.

At step 302, the master device 301 sends a status request in the network indicating the first attributed NAD as receiver of the status request. According to the LIN protocol, the status request can be based on the "Read By Identifier" service. To this end, the status request is a frame having the second ID value 0xB2 and indicating the first attributed NAD as receiver.

At step 303, the master device 301 checks whether a response to the status request is received or not, from the first slave device 102.1 associated with the first attributed NAD. Under the LIN protocol, the response can be a frame response to the frame comprising the second ID value 0xB2, under the "Read by Identifier" service.

If at least one response to the status request is received, the method goes to step 304, whereas, in case of an absence of response to the status request indicating the first attributed NAD, the method goes to step 305.

At step 304, the master device assigns a status to the first attributed NAD, based on the response received at step 303. For example, one of the three following statuses can be assigned to the first attributed NAD at step 304:
- if a response is received from the first slave device 102.1 associated with the first attributed NAD, and if the response indicates that the first slave device 102.1 is operational, the master device 101 assigns the status "operational" to the first attributed NAD. To indicate that the first slave device 102.1 is operational, the response may comprise an error identifier having a value of 0;
- if a response is received from the first slave device 102.1 associated with the first attributed NAD, and if the response indicates that the first slave device 102.1 is defective, the master device 101 assigns the status "defective" to the first attributed NAD. To indicate that the first slave device 102.1 is defective, the response may comprise an error identifier having a value of 1;
- if a corrupted response is received because of at least two responses transmitted from the first slave device 102.1 and from at least one other slave device, the master device 101 assigns the status "redundant" to the first attributed NAD.

At step 305, corresponding to a case of an absence of response to the status request, the master device 101 assigns a status "missing" to the first attributed NAD.

No restriction is attached to the respective names of the statuses that are assigned by the master device 101. The status "missing" may be any first status indicating that the slave device corresponding to an attributed NAD is missing. The status "operational" may be any second status indicating that the slave device corresponding to an attributed NAD is operational. The status "defective" may be any third status indicating that the slave device corresponding to an attributed NAD is defective. The status "redundant" may be any third status indicating that several slave devices are associated with an attributed NAD or that a slave device corresponding to an attributed NAD is corrupted.

After steps 304 or 305, a status is assigned to the first attributed NAD, and the method goes back to step 301, to check whether there are at least one attributed NAD for which no status has been assigned by the master device 101. In the example of figure 1, after the first iteration of steps 301 to 305, no status has been assigned to the second attributed NAD and to the third attributed NAD, so steps 301 to 305 are repeated for the second attributed NAD, then for the third attributed NAD.

For illustrative purposes, it is considered that, after three iterations of steps 301 to 305, the following statuses have been assigned:
- the status "missing" is assigned to the first attributed NAD, indicating that the first slave device 102.1 is missing;
- the status "operational" is assigned to both the second attributed NAD and to the third attributed NAD, indicating that the second slave device 102.2 and the third slave device 102.3 are operational.

This corresponds to a situation, detailed hereafter for illustrative purposes, in which the first slave device 101.1 is replaced with a new slave device, for example because the first slave device 101.1 has been detected as defective, during a previous initiation of the method according to the invention.

After three iterations of steps 301 to 305, the master device 101 determines at the fourth iteration of step 301, that a status has been assigned to each of the attributed NADs stored in the master device 101, and the method goes to step 306.

At step 306, the master device 101 sends a request indicating the default NAD as receiver of the request. The request sent at step 306 may also be a status request such as a frame of the service "Read by Identifier" and comprising the default NAD.

At step 307, the master device 101 checks whether a response to the request sent at step 306 has been received. The response to the request may be a frame response of the service "Read by Identifier".

If so, meaning that a response to the request sent at step 306 has been received at step 307, the method goes to step 308. Else, the method goes to step 311.

At step 308, the master device 101 determines if conditions for configuring a new slave device are met. According to the invention, the following conditions for performing configuration of a new device can be predetermined:
- there is one and only one new slave device detected at step 307;
- there is one and only one missing slave device, which is a slave device for which the attributed NAD is assigned with the first status "missing" at step 305.

If the conditions for configuring of the new slave device are met, the method goes to step 309. Else, if at least one of the conditions for configuring the new slave device is not met, the method goes to step 311.

At step 309, the master device 101 sends a configuration request indicating the default NAD as receiver, for configuring the new slave device by replacing the default NAD with an attributed NAD, and preferably with the attributed NAD of the missing slave device. This allows to automatically configure the new slave device, without the need to define in advance, during manufacturing, the attributed NAD of the new slave device. The slave devices can therefore be manufactured and initially configured with the default NAD, and are automatically configured with the right attributed NAD when introduced in a network in replacement of a former slave device.

Under the LIN protocol, the configuration request can be a frame comprising the frame ID value 0xB3 corresponding to the "Conditional Change NAD". The frame therefore indicates the frame ID value 0xB3, the default NAD identifying the receiver of the frame, and the attributed NAD for configuring the new slave device.

At optional step 310, after step 309, the master device 101 may send a second configuration request indicating the attributed identifier configured in the new slave device, as receiver, the second configuration request defining one or several frame ID values for which the new slave device is a receiver or a sender in subsequent communications.

Under the LIN protocol, the second configuration request can be a frame comprising the frame ID value 0xB7 corresponding to the "Assign frame identifier range" service. The frame being the second configuration request therefore indicates :
- the attributed NAD used to configure the new slave device at step 309;
- a first frame ID value range, associated with a first binary value, 0 for example, defining the at least one frame ID value for which the new slave device is a receiver;
- a second frame ID value range, associated with a second binary value, such as 1 if the first binary value is 0, defining the at least one frame ID value for which the new slave device is a sender.

Therefore, the at least one frame ID value for which the new slave device is receiver or sender, can be identical to the at least one frame ID value for which the missing slave device had been previously configured as receiver or sender.

After step 310, the method can go to step 311, or go back to step 300 until a next initiation of the configuration method is triggered.

At step 311, the master device 311 may generate a message based on the statuses assigned to the attributed NAD and based on the at least one response received at step 307.

For example, if several new slave devices are detected by receiving a corrupted response at step 307, the master device 101 may generate a message indicating that a manual configuration is required, at step 311.

Also, if several attributed NADs are assigned with the first status, indicating that several slave devices are missing, the master device 101 may generate a message indicating that a manual configuration is required.

The master device 101 may use a look-up table to generate an appropriate message for every possible situation. Each situation can be defined by the respective statuses of the attributed NADs and by the reception of one or several responses, or the absence of reception of response, at step 307. The look up table identifies a list of situations, and each situation corresponds to one or several messages to be generated by the master device 101 at step 311. Example of associations between several situations and messages are given hereafter, for illustrative purposes, in the context of a network 100 with three slave devices 102.1-102.3 as illustrated on figure 1.

In a first situation, all the attributed NADs are assigned with the status "operational" and no response has been received at step 307. In the first situation, all the slave devices are operational and no new slave device is detected. The message generated by the master device 101 at step 311 indicates that the slave devices are operational and that no configuration is needed. Alternatively, no message is generated in the first situation and the method goes back to step 300.

In a second situation, one attributed NAD is assigned with the status "defective", for example the first attributed NAD associated with the first slave device 102.1, the other attributed NADs are assigned with the status "operational", and no response has been received at step 307. Therefore, in the second situation, only one slave device is defective, the other slave devices being operational, and no new slave device is detected. The message generated by the master device 101 at step 311 indicates that the slave device corresponding to the attributed NAD to which the status "defective" is assigned, is defective. The message may further indicate to replace the defective slave device with a new device, and to initiate the configuration process again, by triggering step 300.

In a third situation, one attributed NAD is assigned with the status "missing", for example the first attributed NAD associated with the first slave device 102.1, the other attributed NADs are assigned with the status "operational", and no response has been received at step 307. Therefore, in the third situation, only one slave device is missing, the other slave devices being operational, and no new slave device is detected. The message generated by the master device 101 at step 311 indicates that the slave device corresponding to the attributed NAD to which the status "missing" has been assigned, is missing. The message may further indicate to add a new slave device in place of the missing slave device, and to initiate the configuration process again, by triggering step 300.

In a fourth situation, one attributed NAD is assigned with the status "missing", for example the first attributed NAD associated with the first slave device 102.1, the other attributed NADs are assigned with the status "operational", and one response has been received at step 307, indicating that a new slave device is detected. The situation meets the conditions that are checked by the master device 101 at step 308. Therefore, in the fourth situation, step 309, and optionally step 310, are implemented by the master device 101. The master device 101 may further generate, at step 311, a message indicating the missing slave device has been correctly replaced and that the new slave device is correctly configured.

In a fifth situation, one attributed NAD is assigned with the status "missing", for example the first attributed NAD associated with the first slave device 102.1, one attributed NAD is assigned with the status "redundant", for example the second attributed NAD associate with the second slave device 102.2, and the other attributed NAD, if any, are assigned with the status "operational", and no response has been received at step 307. Therefore, in the fifth situation, the first and second slave devices 102.1 and 102.2 are erroneously configured with the same first attributed NAD, and they both reply to the status request indicating the first attributed NAD sent at the first iteration of step 302: the responses transmitted simultaneously to the master device are received as a corrupted message. The message generated by the master device 101 at step 311 may indicate that the slave device associated with the attributed NAD assigned with the status "missing" is missing and that two slave devices associated with the attributed NAD assigned with the status "redundant", are redundant. The message may further indicate to replace the missing slave device with a new slave device and to initiate the configuration again, by triggering step 300.

In a sixth situation, two attributed NADs are assigned with the status "defective", for example the first attributed NAD and the second attributed NAD, the other attributed NAD, if any, is or are assigned with the status "operational, and no response has been received at step 307. Therefore, in the sixth situation, two slave devices are defective and no new slave device is detected. The message generated by the master device 101 at step 311 may indicate that the two slave devices associated with the attributed NADs assigned with the status "defective", are defective. In addition, the message may further indicate to replace one of the defective slave devices and to initiate the configuration again, by triggering step 300.

In a seventh situation, one attributed NAD is assigned with the status "defective", for example the first attributed NAD associated with the first slave device 102.1, one attributed NAD is assigned with the status 'missing", for example the second attributed NAD associated with the second slave device 102.2, the other attributed NAD, if any, is or are assigned with the status "operational", and no response is received at step 307. Therefore, in the third situation, there is one missing slave device, one defective slave device and no new slave device is detected. The message generated by the master device 101 at step 311 indicates that the slave device associated with the attributed NAD assigned with the status "missing", is missing, and that the slave device associated with the attributed NAD assigned with the status "defective", is defective. The message may further indicate to replace the missing slave device with a new pump and to initiate the configuration process again, by triggering step 300.

In an eighth situation, one attributed NAD is assigned with the status "defective", for example the first attributed NAD associated with the first slave device 102.1, one attributed NAD is assigned with the status 'missing", for example the second attributed NAD associated with the second slave device 102.2, the other attributed NAD, if any, is or are assigned with the status "operational", and one response is received at step 307. Therefore, in the eighth situation, there is one defective slave device, one missing slave device and a new slave device is detected. The situation meets the conditions that are checked by the master device 101 at step 308. Therefore, in the fourth situation, steps 309 and optionally 310 are implemented by the master device 101. The master device 101 may further generate, at step 311, a message indicating the missing slave device has been correctly replaced, that the new slave device is correctly configured, and that the slave device associated with the attributed NAD assigned with the status "defective", is defective. The message may further indicate to replace the defective slave device and to initiate the configuration process again, by triggering step 300.

In a ninth situation, one attributed NAD is assigned with the status "defective", for example the first attributed NAD associated with the first slave device 102.1, one attributed NAD is assigned with the status 'missing", for example the second attributed NAD associated with the second slave device 102.2, one attributed NAD is assigned with the status "redundant", for example the third attributed NAD associated with the status "redundant", and the other attributed NAD, if any, is or are assigned with the status "operational", and no response is received at step 307. Therefore, according to the ninth situation, there is one slave device that is defective, there are two slave devices that are erroneously configured with the same third attributed NAD and no new slave device is detected. The message generated by the master device 101 at step 311 may indicate that the slave device associated with the attributed NAD assigned with the status "defective" is defective, and that the two slave devices associated with the attributed NAD having the status "redundant", are redundant. The message may further indicate to replace the defective slave device with a new slave device and to initiate the configuration process again, by triggering step 300.

In a tenth situation, two attributed NADs are assigned with the status "missing", the other attributed NAD being assigned with the status "operational", and no response is received at step 307. Therefore, in the tenth situation, there are two missing slave devices, and no new slave device is detected. The message generated by the master device 101 at step 311 may indicate that two slave devices associated with NADs assigned with the status "missing" are missing. The message may further indicate to proceed with a manual configuration, because the automatic configuration allowed by the method according to the invention allows to configure one new slave device at a time. Under the manual configuration:
- a first new slave device can be added in place of the missing first slave device, and the first attributed NAD is assigned to the first new slave device by sending a configuration request to the first new slave device by indicating the default identifier as receiver. The first new slave device is then configured with the first attributed NAD; then
- a second new slave device can then be added in place of the missing second slave device, and the automatic configuration can be initiated again, by triggering step 300.

In an eleventh situation, two attributed NADs are assigned with the status "missing", the other attributed NAD being assigned with the status "operational", and one response is received at step 307. Therefore, in the tenth situation, there are two missing slave devices, and a new slave device is detected. However, the master device 101 cannot determine which of the missing slave devices has been replaced, so a manual configuration can be requested also. The message generated by the master device 101 at step 311 can indicate that two slave devices associated with NADs assigned with the status "missing", are missing, and to proceed with a manual configuration to configure the new slave device.

In a twelfth situation, two attributed NADs are assigned with the status "missing", the other attributed NAD being assigned with the status "operational", and two responses have been received at step 307. Therefore, in the twelfth situation, the two missing slave devices have been replaced with respective new devices. However, because the two new slave devices are initially configured with the default NAD, it is not possible to configure them using the configuration process of steps 309 and 310. Therefore, a manual configuration can be requested. The message generated by the master device 101 at step 311 can indicate that two slave devices associated with NADs assigned with the status "missing" are missing, and to proceed with a manual configuration to configure the new slave device.

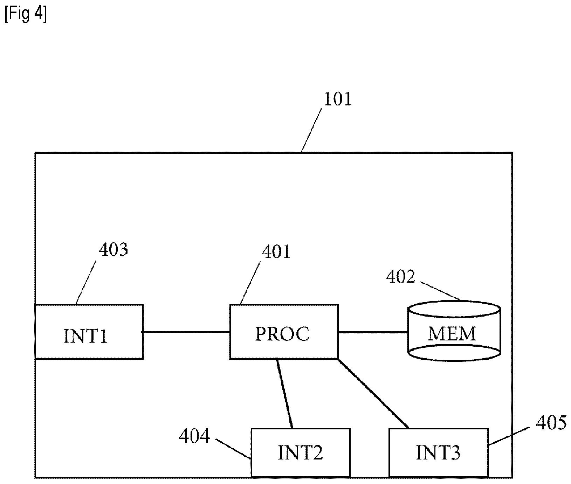

Figure 4 shows a structure of a master device 101 of a network 100, according to some embodiments of the invention.

The master device 101 comprises a processor 401 and a memory 402.

The processor 401 may comprise one or multiple microprocessors, a Central Processing Unit, CPU, on a single Integrated Circuit, IC, or several IC chips.

No restriction is attached to the memory 402, which may be any non-transient, tangible form of memory. For example, it can comprise ROM, EEPROM and/or flash memory. The processor 401 may be programmable and may be configured to execute instructions that are stored in its internal memory or instructions that are stored in the memory 402.

The memory 402 can indeed store instructions for implementing the steps 301 to 311 of the method described on figure 3.

The memory 402 may further store:
- the default NAD;
- the attributed NADs;
- the table storing correspondences between the frame ID values and attributed NADs of sender and receiver, or between the service ID values and the specific services;
- the look up table described above, defining messages to be generated for each situation among a set of predefined situations.

The master device 101 further comprises a first interface 403 arranged for communicating with the slave devices 102.1-102.3 via the wired communication link 103 in the network 100. The first interface 403 may be a LIN interface.

The master device 101 may further comprise a second interface 404 arranged for communicating the message generated at step 307 to an external entity, such as a display for example.

The master device 101 may further comprise a third interface 405 arranged for receiving commands for an operator to manually configure the slave devices, as previously explained.

The example embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method for configuring a new slave device in a network (100) comprising a master device (101) and a plurality of slave devices (102.1-102.3), the plurality comprising slave devices of a same type, the master device storing a default identifier and storing respective attributed identifiers attributed the slave devices of the plurality, the method being implemented by the master device and comprising the following steps, for each stored attributed identifier:
- sending (302) a status request indicating the attributed identifier as receiver of the status request;
- in case of an absence of response to the status request, assigning (305) a first status to the attributed identifier, the first status indicating that the slave device corresponding to the attributed identifier is a missing slave device ;
the method further comprising :
- sending (306) a request indicating the default identifier as receiver, and, in case of a reception (307) of a response to the request, detecting a new slave device in the network,
- if the new slave device is detected and if there is one and only one missing slave device, sending (309) a configuration request indicating the default identifier as receiver, for configuring the new slave device by replacing the default identifier with an attributed identifier.

2. The method according to claim 1, wherein the configuration request is for configuring the new device by replacing the default identifier by the attributed identifier associated with the missing slave device.

3. The method according to claim 1 or 2, wherein the network (100) is a Local Interconnect Network, LIN, and wherein the status requests, the request indicating the default identifier and configuration request are conforming to the LIN protocol.

4. The method according to one of claims 1 to 3, further comprising, after sending (309) the configuration request, named first configuration request, sending (310) a second configuration request indicating, as receiver, the attributed identifier configured in the new slave device, the second configuration request defining one or several frame identifiers for which the new slave device is a receiver or a sender in subsequent communications.

5. The method according to one of the preceding claims, further comprising, for each attributed identifier, after sending (302) a status request indicating the attributed identifier as receiver, determining (304; 305) a status to be assigned to the attributed identifier, among a plurality of predefined statuses including the first status and at least one other status, the status being determined based on a received response to the status request or based on the absence of response to the status request.

6. The method according to claim 5, wherein the at least one other status comprises a second status indicating that the slave device (102.1-102.3) corresponding to the attributed identifier is operational, a third status indicating that the slave device corresponding to the attributed identifier is defective.

7. The method according to claim 5 or 6, wherein, if, after sending (302) of a status request indicating a given attributed identifier a receiver, the master device (101) receives (303) two responses, the master device assigns (304) a redundant status to the attributed identifier.

8. The method according to one of the preceding claims, wherein, if no new slave device is detected, or if none of the slave devices is missing, or if strictly more than one of the slave devices is missing, then the master device (101) generates (311) a message based on the statuses assigned to the attributed identifiers and based on whether a new slave device is detected or not.

9. The method according to claim 8, wherein if several new slave devices (102.1; 102.3) are detected, the master device (101) generates (311) a message indicating that a manual configuration is required.

10. The method according to claim 8 or 9, wherein if several attributed identifiers are assigned with the first status, the master device (101) generates (311) a message indicating that a manual configuration is required.

11. A computer program comprising instructions arranged for implementing the method according to one of the preceding claims, when said instructions are executed by a processor (401).

12. A master device (101) for configuring a new slave device in a network (100) comprising a plurality of slave devices (102.1-102.3), the plurality comprising slave devices of a same type, the master device comprising a memory (402) storing a default identifier and storing respective attributed identifiers attributed the slave devices of the plurality, the master device comprising an interface (403) for communicating with the slave devices in the network, and further comprising a processor (401) configured for, for each stored attributed identifier:
- sending, via the interface, a status request indicating the attributed identifier as receiver of the status request;
- in case of an absence of response to the status request, associating a first status with the attributed identifier, the first status indicating that the slave device corresponding to the attributed identifier is a missing slave device ;
the processor is further configured for :
- sending, via the interface, a request indicating the default identifier as receiver, and, in case of a reception of a response to the request, detecting a new slave device in the network,
- if the new slave device is detected and if there is one and only one missing slave device, sending, via the interface, a configuration request indicating the default identifier as receiver, for configuring the new slave device by replacing the default identifier with an attributed identifier

13. A network (100) comprising a master device (101) according to claim 12, and a plurality of slave devices (102.1-102.3) of a same type, the master device and the slave devices being arranged to communicate via a wired communication link (103).

14. The network (100) according to claim 13, wherein the slave devices (102.1-102.3) are wash pumps.

15. A vehicle (200) comprising the network (100) according to claim 13 or 14.
